# EUROPEAN PATENT APPLICATION

(11) **EP 4 844 010 A1**
(43) Date of publication of application: **25.11.2026**
(21) Application number: 25742119.8
(22) Date of filing: 08.01.2025
(51) Int. Cl.: C08F 218/08, C08F 218/04, C08F 220/40, C08F 222/10, C08F 230/02, C08F 220/18, C09D 131/04, C09D 5/18

(54) **VINYL ACETATE-BASED COPOLYMER AND FIRE-RESISTANT PAINT COMPOSITION COMPRISING SAME**

(30) Priority: 19.01.2024 KR 20240008862
(71) Applicant: KCC Corporation, Seoul 06608 (KR)
(72) Inventor: KIM, Kyung Taek, Gwangju 61982 (KR); PARK, Young Jin, Paju-si, Gyeonggi-do 10835 (KR); AN, Hui Cheol, Yongin-si, Gyeonggi-do 17079 (KR); KIM, In Seon, Yongin-si, Gyeonggi-do 17176 (KR); KOO, Chang Mo, Seongnam-si, Gyeonggi-do 13629 (KR)
(74) Representative: Pfenning, Meinig & Partner mbB
(86) International application number: PCT/KR2025/000371
(87) International publication number: WO 2025/155022

(57) **Abstract**

The present invention relates to a vinyl acetate-based copolymer having excellent initial water resistance and excellent fire resistance, and a fire-resistant coating composition comprising same.

## Description

### [Technical field]

The present invention relates to a vinyl acetate-based copolymer having excellent initial water resistance and fire resistance performance, and a fire-resistant coating composition comprising the same.

### [Background Art]

Fire-resistant coatings protect buildings and other structures from fire, forcibly blocking or delaying the approach of high-temperature heat in the event of a fire, thereby providing time to extinguish the fire and rescue lives. Among fire-resistant coatings, foam fire-resistant coating is a coating in which a dry coating film expands to form a carbonized layer when exposed to heat. The formed carbonized layer eventually burns, but since it takes time to burn, it functions to protect a substrate (e.g., steel frame) from flames and combustion heat for a certain period and reduce the impact received therefrom. Foam fire-resistant coatings are generally oil-based, but oil-based fire-resistant coatings suffer from disadvantages such as a poor working environment due to odors from organic solvents during work, as well as slower drying compared to water-based types due to the thick coating film.

As a technology to solve these problems, Korean Patent Registration No. 10-0377832 discloses a water-based foam fire-resistant coating. The water-based fire-resistant coating composition has the advantage of exhibiting excellent water resistance without emitting gases harmful to the human body because it does not contain halogen components, but it has the limitation that its fire resistance performance is only 1 hour. In addition, conventional fire-resistant coatings have the problem of inferior water resistance.

Accordingly, there is a need to develop eco-friendly fire-resistant coatings that have excellent fire resistance performance and excellent water resistance of the coating film.

### [Description of Invention]

### [Technical Problem]

The present invention provides an eco-friendly water-based fire-resistant coating composition that has excellent fire resistance performance and excellent water resistance of the coating film.

### [Technical Solution]

The present invention provides a vinyl acetate-based copolymer that is polymerized from a monomer mixture comprising a vinyl acetate monomer, an alkyl-modified vinyl acetate monomer, a phosphoric acid-containing acrylic monomer, and a multivalent double bond-containing monomer, and a fire-resistant coating composition including the same.

### [Advantageous Effects]

The present invention provides an eco-friendly water-based fire-resistant coating composition that has excellent fire resistance performance and excellent water resistance of the coating film. The fire-resistant coating composition according to the present invention achieves fire resistance performance of 2 hours or more, while also exhibiting excellent durability and water resistance. The fire-resistant coating composition of the present invention provides excellent water resistance both immediately after application and after complete drying of the coating film, enables off-site (shop) application due to a fast drying speed of the coating film, shortens construction periods even during on-site application, and facilitates easy control of the coating film thickness. In addition, the water-based fire-resistant coating composition according to the present invention is environmentally friendly due to the absence of organic solvents.

### [Best Mode]

Hereinafter, the present invention will be described in detail. However, the present invention is not limited to the following content, and each component may be modified in various ways or selectively combined as needed. Therefore, it should be understood that the scope of the present invention includes all modifications, equivalents, and alternatives falling within the spirit and scope of the present invention.

The "glass transition temperature" used in the present specification is measured by a conventional method known in the art and, for example, can be measured by differential scanning calorimetry (DSC). A functional group value such as an "acid value" is measured by a conventional method known in the art, and for example, can be measured by a titration method. The "particle size (D50)" is measured by a conventional method known in the art, and for example, can be measured by laser light scattering (LLS). The "viscosity" is measured by a conventional method known in the art, and for example, can be measured using a Brookfield viscometer at room temperature (25 °C).

### <Vinyl acetate-based copolymer>

In the fire-resistant coating composition of the present invention, the copolymer serves as a main resin that imparts durability to a dry-cured coating film at room temperature; and when exposed to high-temperature heat, it transforms the coating film into a fluid state so that the coating film properly expands and foams when gas is generated, while serving as a skeleton for a foamed carbonized layer. In addition, the copolymer serves to improve the water resistance of the coating film.

The vinyl acetate-based copolymer is a copolymer polymerized from a monomer mixture comprising a vinyl acetate monomer, an alkyl-modified vinyl acetate monomer, a phosphoric acid-containing acrylic monomer, and a multivalent double bond-containing monomer. The copolymer may be prepared from a resin composition comprising the monomer mixture, an initiator, and a water-based solvent. The resin composition may further include additives commonly used in the art, such as emulsifiers, protective colloids, and buffers.

The monomer mixture includes a vinyl acetate monomer. The vinyl acetate monomer may be included in an amount of 50 to 85 wt%, for example, 60 to 80 wt%, based on the total weight of the monomer mixture. When the content of the vinyl acetate monomer is less than the above-mentioned range, foamability and economic feasibility can be degraded, and when the content exceeds the above-mentioned range, water resistance can be degraded.

The monomer mixture includes an alkyl-modified vinyl acetate monomer. The fire-resistant coating composition of the present invention can exhibit excellent water resistance compared to those using conventional water-based vinyl acetate resins by using a copolymer in which the alkyl-modified vinyl acetate monomer is copolymerized.

The alkyl-modified vinyl acetate monomer may be a compound represented by the following Chemical Formula 1. 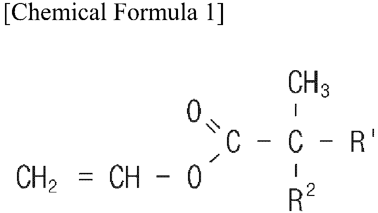 in Chemical Formula 1,
R¹ and R² are hydrocarbon groups having 1 to 15 carbon atoms, which are the same or different from each other.

Since water is used in water-based coatings, there is a problem in that the water and resin come into contact to cause a hydrolysis reaction, thereby degrading water resistance. A copolymer including the alkyl-modified vinyl acetate monomer of Chemical Formula 1 has a steric effect due to the alkyl-modified structure, namely substituents R¹ and R², which hinders the contact of the acetate group (O-C=O) with water, making hydrolysis reactions difficult, and as a result, the water resistance of the coating film can be greatly improved. In addition, by minimizing defects such as holes in the dry coating film, it is possible to prevent gas bubbles from escaping during foaming, thereby improving foaming performance.

As the alkyl-modified vinyl acetate monomer, a compound may be used in which R¹ and R² in Chemical Formula 1 are alkyl groups having 1 to 15 carbon atoms that are the same or different from each other, for example, one or more of R¹ and R² are alkyl groups having 3 to 13 carbon atoms, or as another example, one or more of R¹ and R² are alkyl groups having 6 to 10 carbon atoms. As an example, the alkyl-modified vinyl acetate monomer may be vinyl neononanoate, vinyl neodecanoate, or vinyl neoundecanoate.

The alkyl-modified vinyl acetate monomer may be included in an amount of 10 to 40 wt%, for example, 15 to 30 wt%, based on the total weight of the monomer mixture. When the content of the alkyl-modified vinyl acetate monomer is less than the above-mentioned range, water resistance may be degraded, and when the content exceeds the above-mentioned range, foamability and economic feasibility may be degraded.

The monomer mixture includes a phosphoric acid-containing acrylic monomer. The fire-resistant coating composition of the present invention may further improve water resistance and foamability compared to those using conventional water-based vinyl acetate resins by using a copolymer in which the phosphoric acid-containing acrylic monomer is copolymerized.

The phosphoric acid-containing acrylic monomer may be a compound represented by the following Chemical Formula 2.

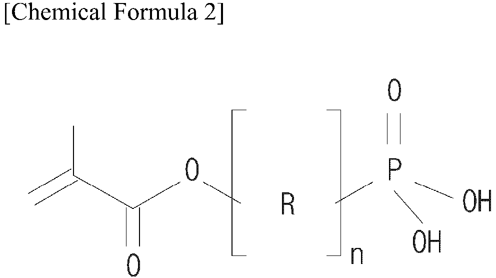

In Chemical Formula 2,
R is ethylene oxide or propylene oxide, and
n is an integer from 1 to 10.

The phosphoric acid-containing acrylic monomer improves adhesion to the substrate due to the carboxyl group included in its structure and can improve water resistance and coating film strength by generating crosslinking power with pigments such as TiO₂ included in the coating.

As the phosphoric acid-containing acrylic monomer, a compound in which R in Chemical Formula 2 is ethylene oxide or propylene oxide and n is an integer from 0 to 10 or an integer from 2 to 8 may be used. As an example, the phosphoric acid-containing acrylic monomer may be a phosphoalkyl (meth)acrylate such as phosphoethyl (meth)acrylate, phosphopropyl (meth)acrylate, phosphobutyl (meth)acrylate, salts thereof, and mixtures thereof; a phosphoalkoxy (meth)acrylate such as phosphoethylene glycol (meth)acrylate, phosphodiethylene glycol (meth)acrylate, phosphotriethylene glycol (meth)acrylate, phosphopropylene glycol (meth)acrylate, phosphodipropylene glycol (meth)acrylate, phosphotripropylene glycol (meth)acrylate), salts thereof, and mixtures thereof. In addition, commercially available products, such as SIPOMER PAM-100, SIPOMER PAM-200, and SIPOMER PAM-300 (Solvay), may be used as the phosphoric acid-containing acrylic monomer.

The phosphoric acid-containing acrylic monomer may be included in an amount of 0.5 to 5 wt%, for example, 1 to 3 wt%, based on the total weight of the monomer mixture. When the content of the phosphoric acid-containing acrylic monomer is less than the above-mentioned range, water resistance and foamability may be degraded, and when the content exceeds the above-mentioned range, synthesis stability and economic feasibility may be degraded.

The monomer mixture includes a multivalent double bond-containing monomer. When using a copolymer in which the multivalent double bond-containing monomer is copolymerized, intermolecular chain bonding occurs, and thus excellent water resistance can be exhibited compared to using conventional water-based vinyl acetate resins.

The multivalent double bond-containing monomer may be a compound represented by the following Chemical Formula 3. 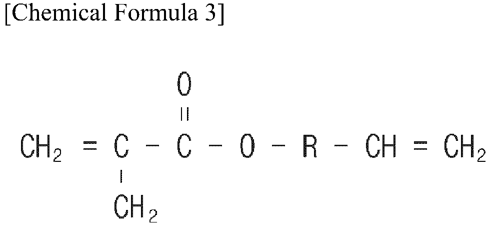 in Chemical Formula 3,
R is a hydrocarbon group having 1 to 15 carbon atoms.

As the multivalent double bond-containing monomer, a compound in which R in Chemical Formula 3 is an alkylene group having 1 to 15 carbon atoms, for example, an alkylene group having 1 to 10 carbon atoms, may be used. As an example, as the multivalent double bond-containing monomer, a (meth)acrylate-based monomer having a double bond, such as allyl (meth)acrylate, 1,6-hexanediol di(meth)acrylate, 1,3-butanediol di(meth)acrylate, 1,4-butanediol di(meth)acrylate, trimethylolpropane tri(meth)acrylate, or mixtures thereof may be used.

The multivalent double bond-containing monomer may be included in an amount of 0.01 to 0.5 wt%, for example, 0.01 to 0.08 wt%, based on the total weight of the monomer mixture. When the content of the multivalent double bond-containing monomer is less than the above-mentioned range, water resistance may be degraded, and when the content exceeds the above-mentioned range, foamability may be degraded.

The monomer mixture may further include an acrylic monomer. As the acrylic monomer, ethyl (meth)acrylate, isobutyl (meth)acrylate, n-butyl (meth)acrylate, 2-ethylhexyl (meth)acrylate, lauryl (meth)acrylate, methacrylic acid (MAA), or mixtures thereof may be used.

The acrylic monomer may be included in an amount of 4 to 20 wt%, for example, 8 to 15 wt%, based on the total weight of the monomer mixture. When the content of the above-mentioned acrylic monomer is below the above-mentioned range, water resistance may be degraded due to hydrophilization, and when the content exceeds the above-mentioned range, synthesis stability may be degraded due to differences in reactivity.

The vinyl acetate-based copolymer according to the present invention is a water-based resin having a glass transition temperature of -30 to 60 °C and a coating film formation temperature of 0 to 30 °C. The solid content of the vinyl acetate-based copolymer may be 40 to 60%, for example 45 to 55%, the particle size (D50) may be 200 to 500 nm, for example 300 to 400 nm, the viscosity (at 25 °C) may be 200 to 800 cPs, for example 300 to 600 cPs, and the pH may be 2.5 to 5.5, for example 3.5 to 4.5. By using the vinyl acetate-based copolymer as a main resin, the fire-resistant coating composition of the present invention exhibits excellent durability, such as chemical resistance, weather resistance, and flexibility and, in particular, can exhibit excellent foamability and water resistance.

When the glass transition temperature of the vinyl acetate-based copolymer is below the above-mentioned range, the hardness may degrade, and when the temperature exceeds the above-mentioned range, film-forming properties degrade, which may cause cracking. When the coating film-forming temperature of the vinyl acetate-based copolymer is below the above-mentioned range, the hardness may degrade, and when the temperature exceeds the above-mentioned range, film-forming properties degrade, which may result in the use of a large amount of organic solvent, which reduces environmental friendliness. When the solid content of the vinyl acetate-based copolymer is below the above-mentioned range, the solvent (water) content in the coating increases, which may slow down the drying speed, and when the solid content exceeds the above-mentioned range, the viscosity increases, which may reduce the synthesis stability of the resin. When the particle size (D50) of the vinyl acetate-based copolymer is less than the above-mentioned range, water resistance may be degraded due to an excess amount of emulsifier, and when the particle size (D50) exceeds the above-mentioned range, the stability of the resin particles may degrade and precipitation may occur. When the viscosity (at 25 °C) of the vinyl acetate-based copolymer is less than the above-mentioned range, dispersion may become poor during pigment dispersion, which may degrade the appearance characteristics of the coating film, and when the viscosity exceeds the above-mentioned range, the synthesis stability of the resin may degrade. When the pH of the vinyl acetate-based copolymer deviates from the above-mentioned range, the stability of the resin degrades due to hydrolysis, and thus storage stability can degrade.

### <Fire-resistant coating composition>

The fire-resistant coating composition of the present invention comprises a vinyl acetate-based copolymer, a foaming agent, and a water-based solvent. The fire-resistant coating composition of the present invention may further include, as needed, a thickener, a catalyst, a carbonizing agent, a pigment, a reinforcing agent, and an additive commonly used in the art. As the additive, a flame retardant, a coating film-forming agent, an anti-foaming agent, a dispersant, a preservative, a plasticizer, an anti-freeze agent, a pH-adjusting agent, and the like may be used.

### Vinyl acetate-based copolymer

The fire-resistant coating composition of the present invention uses the above-mentioned vinyl acetate-based copolymer as a main resin. Conventional fire-resistant coatings have a problem in that the water resistance of the coating film is poor, which causes deformation in the appearance of the coating film when exposed to moisture for a long period of time. In addition, due to the loss of fire-resistant components, a problem occurs in that fire resistance performance degrades during a fire. The fire-resistant coating composition of the present invention can solve these problems by applying the vinyl acetate-based copolymer.

The vinyl acetate-based copolymer may be included in an amount of 5 to 35 wt%, for example 10 to 30 wt% or 20 to 30 wt%, based on the total weight of the fire-resistant coating composition. When the content of the vinyl acetate-based copolymer is below the above-mentioned range, the durability of the dry-cured coating film may be poor, and when the content exceeds the above-mentioned range, the foaming rate is lowered and the coating film is peeled off in the middle of foaming, resulting in a failure to exhibit normal fire resistance performance.

### Foaming agent

The fire-resistant coating composition of the present invention includes a foaming agent. The foaming agent decomposes at high temperatures and reacts with a carbonizing agent and a catalyst to form a carbonized layer and serves to enable the carbonized layer to foam properly by generating gas during the reaction.

As the foaming agent, conventional components known in the relevant technical field may be used without limitation, and for example, a nitrogen-containing foaming agent may be used. The nitrogen-containing foaming agent foams a carbonized layer generated by a carbonizing agent and a catalyst while a nitrogen-containing gas, for example, ammonia gas, generated by the thermal decomposition of a compound at high temperatures is released, thereby sustaining a thermal insulation effect. At this time, after a carbonized layer is formed from the dry coating film of the fire-resistant coating, an appropriate decomposition temperature is required so that foaming of the nitrogen-containing foaming agent can occur.

Non-limiting examples of usable nitrogen-containing foaming agents may include melamine, dicyandiamide, ammeline, melam, urea, ureido melamine, glycine, and the like. The above-mentioned components may be used alone or in combination of two or more.

The foaming agent may be included in an amount of 1 to 15 wt%, for example, 5 to 10 wt%, based on the total weight of the fire-resistant coating composition. When the content of the foaming agent is below the above-mentioned range, the amount of gas generated is small so that the foaming rate may be poor, and when the content exceeds the above-mentioned range, it is difficult to form a uniform carbonized layer due to excessive gas release, and as the strength of the foamed coating film is lowered due to foaming, fire resistance performance may also be lowered.

### Water-based solvent

The fire-resistant coating composition of the present invention includes a water-based solvent. The water-based solvent functions to adjust the viscosity of the coating and provide fluidity. In the present invention, by using a water-based solvent instead of an organic solvent, the working environment and air quality can be improved, and an eco-friendly coating can be provided. Water may be used as the water-based solvent.

The content of the water-based solvent may be the balance of the fire-resistant coating composition for reaching 100% by weight. As an example, the water-based solvent may be included in an amount of 5 to 30 wt%, for example, 7 to 20 wt%, based on the total weight of the fire-resistant coating composition. When the content of the water-based solvent is below the above-mentioned range, it may be difficult to manufacture the coating, and when the content exceeds the above-mentioned range, workability may be reduced due to the excessive amount of solvent, and the content of flame retardants and the like for forming a carbonized layer may be relatively reduced, resulting in a reduced foaming rate and poor fire resistance performance.

### Thickener

The fire-resistant coating composition of the present invention may include a thickener. The thickener serves to impart appropriate viscosity and fluidity to the coating. As the thickener, amide wax, cellulose wax, or mixtures thereof may be used.

As an example, amide wax may be used as the thickener. The amide wax imparts hydrophilicity to the coating and enables hydrogen bonds within the coating to interact to exhibit thixotropic properties. Furthermore, it prevents the coating film from sagging during application, and inhibits the settling of pigment components during coating storage. Water-soluble polyamide wax may be used as the amide wax. Water-soluble polyamide wax has excellent workability and storability and is easy to use in coating manufacturing.

The solid content of the amide wax is 10 to 30%, and an acid value may be 1 to 20 mgKOH/g, for example, 1 to 12.5 mgKOH/g. When the properties of the amide wax satisfy the above-mentioned ranges, productivity and workability can be further improved. In particular, when the acid value of the amide wax is less than the above-mentioned range, water-soluble properties may be degraded, which may increase the manufacturing time due to an increased stirring time during coating manufacturing, thereby reducing productivity, and when the acid value exceeds the above-mentioned range, since thickening properties are degraded, flow resistance during application work is lowered, thereby degrading workability.

The content of the thickener may be 1 to 10 wt%, for example, 1 to 5 wt%, based on the total weight of the fire-resistant coating composition. When the content of the thickener is less than the above-mentioned range, the flow resistance is poor, which degrades workability, and when the content exceeds the above-mentioned range, the viscosity is excessively increased, thereby making spray or brush application difficult.

### Catalyst

The fire-resistant coating composition of the present invention may include a catalyst. The catalyst is thermally decomposed at high temperatures to release gas, which promotes the reaction between the carbonizing agent and the foaming agent, and simultaneously plays a role of forming a carbonized layer by participating in the reaction. As the catalyst, a conventional component known in the relevant technical field may be used without limitation, and as an example, an acid catalyst may be used. The acid catalyst generates ammonia, which serves as a foaming gas, during thermal decomposition and donates hydrogen ions (H⁺) to the carbonizing agent, thereby promoting the formation of a carbonized layer.

Non-limiting examples of usable catalysts may include primary ammonium phosphate, secondary ammonium phosphate, ammonium phosphite, melamine phosphate, dimelamine phosphate,
melamine pyrophosphate, melamine polyphosphate, tricrecyl phosphate, trichloroalkyl phosphate, ammonium polyphosphate, monoammonium phosphate, nitropolyphosphate, and the like. The above-mentioned components may be used alone or in combination of two or more.

The content of the catalyst may be 15 to 35 wt%, for example 20 to 30 wt%, based on the total weight of the fire-resistant coating composition. When the content of the catalyst is less than the above-mentioned range, since the reaction between the carbonizing agent and the foaming agent is not smooth, the formation of a carbonized layer may be reduced, and when the content exceeds the above-mentioned range, the foaming effect of the carbonized layer is hindered to lower the foaming rate, thereby degrading fire resistance performance.

### Carbonizing agent

The fire-resistant coating composition of the present invention may include a carbonizing agent. The carbonizing agent serves to form a carbonized layer exhibiting fire resistance performance by reacting with the foaming agent at high temperatures. As the carbonizing agent, a conventional component known in the relevant technical field may be used without limitation. Non-limiting examples of usable carbonizing agents may include pentaerythritol, dipentaerythritol, tripentaerythritol, starch, phenolformaldehyde resin, sugar, polyurethane, sorbitol, trimethylolpropane, trimethylolethane, trimethylolpropane, and the like. The above-mentioned components may be used alone or in combination of two or more.

The content of the carbonizing agent may be 5 to 15 wt%, for example, 5 to 10 wt%, based on the total weight of the fire-resistant coating composition. When the content of the carbonizing agent is less than the above-mentioned range, the foamed coating film may not be sufficiently formed, and when the content exceeds the above-mentioned range, a proper foamed coating film may not be formed, foam flow phenomena may occur, and the foaming effect and fire resistance performance may be degraded.

### Pigment

The fire-resistant coating composition of the present invention may include a pigment. The pigment serves to impart color to the fire-resistant coating and simultaneously improve fire resistance performance by forming a ceramic insulation layer on the foamed coating film. As the pigment, an organic pigment, an inorganic pigment, a metallic pigment, an aluminum-paste (Al-paste), a pearl, an extender pigment, and the like commonly used in fire-resistant coatings may be used without limitation. Non-limiting examples of usable pigments may include azo-based, phthalocyanine, iron oxide-based, cobalt-based, carbonate-based, sulfate-based, silicate-based, and chromate-based colored pigments, and for example, one or more selected from the group consisting of titanium dioxide (TiO₂), zinc oxide, bismuth vanadate, cyanine green, carbon black, red iron oxide, yellow iron oxide, navy blue, and cyanine blue may be used.

The content of the pigment may be 5 to 20 wt%, for example, 8 to 15 wt%, based on the total weight of the fire-resistant coating composition. When the content of the pigment is below the above-mentioned range, not only are the coloring and hiding power of the coating film poor, but it also becomes difficult to form a uniform pore layer inside the foamed coating film during the high-temperature foaming process, which may reduce the density and foaming rate of the foamed coating film. On the other hand, when the content of the pigment exceeds the above-mentioned range, the content of flame retardants and the like for forming the carbonized layer may be relatively reduced, resulting in a reduced foaming rate and poor fire resistance performance.

### Reinforcing agent

The fire-resistant coating composition of the present invention may include a reinforcing agent. The reinforcing agent serves to improve fire resistance performance by increasing the strength of the carbonized layer when the dry-cured coating film is foamed at high temperatures to form a foamed coating film having a carbonized layer, thereby preventing the foamed coating film from peeling off or partially flying off due to flames and the like. In addition, the reinforcing agent imparts thixotropic properties to the coating to prevent sagging during application and can be evenly distributed within the dry coating film to prevent cracking.

As the reinforcing agent, conventional components known in the relevant technical field may be used without limitation, and for example, inorganic materials such as metal oxides, metal hydroxides, metal compounds, glass, silicon-based pigments, and the like may be used. Non-limiting examples of usable reinforcing agents may include silicates (talc), molybdenum trioxide, zirconium dioxide, aluminum hydroxide, zinc borate, glass powder, glass fibers, and the like. The above-mentioned components may be used alone or in combination of two or more.

The content of the reinforcing agent may be 2 to 15 wt%, for example, 2 to 10 wt%, based on the total weight of the fire-resistant coating composition. When the content of the reinforcing agent is below the above-mentioned range, the strength reinforcing effect of the foamed coating film may be insufficient, and when the content exceeds the above-mentioned range, the strength of the carbonized layer is too hard, causing cracks to form in the carbonized layer when gas is generated, and also significantly reducing the foaming rate, which may result in poor fire resistance performance.

### Additive

The fire-resistant coating composition of the present invention may include an additive commonly used in the field of fire-resistant coatings within a range that does not impair the inherent properties of the composition. Non-limiting examples of usable additives may include a flame retardant, a coating film-forming agent, an anti-foaming agent, a dispersant, a preservative, a plasticizer, an anti-freeze agent, a pH-adjusting agent, and the like.

The flame retardant serves to promote the formation of a carbonized layer when the cured coating film is exposed to high temperatures, thereby imparting flexibility to the initial foamed carbonized layer. As the flame retardant, conventional components known in the relevant technical field may be used without limitation, and for example, phosphorus oxides, oxirane-treated triethyl phosphate polymers, and the like may be used.

The coating film-forming agent is used to facilitate the fusion between the pigment and the resin and facilitate film formation when forming a coating layer. In addition, it serves to lower the minimum coating film formation temperature, thereby enabling the coating film to form at low temperatures. As the coating film-forming agent, conventional components known in the relevant technical field may be used without limitation, and for example, 2-ethylhexyl benzoate, acetyl tributyl citrate, diisobutyl adipate, and the like may be used.

The additive is added in an appropriate amount according to its function within the range known in the relevant technical field. For example, the content of each of the additives may be 0.1 to 10 wt% based on the total weight of the fire-resistant coating composition.

The fire-resistant coating composition according to the present invention may have a 2-hour fire resistance performance according to the fire resistance performance test method specified in Korean Industrial Standard KS F2257. Specifically, when heating the dry coating film for 2 hours, the average temperature of each cross-section is 538 °C or lower, and the total maximum temperature can be continuously maintained at 649 °C or lower. In addition, the fire-resistant coating composition satisfies properties such as a KU viscosity (at 25 °C) of 110 to 140 KU and a flow resistance (SAG) of 60 mil or more and exhibits excellent application workability.

The fire-resistant coating composition of the present invention may be applied to various applications requiring excellent fire resistance performance. As an example, the composition can be used for general, factory, and commercial buildings, and can also be applied to ships and marine structures, automobiles, aircraft, mobile homes, and the like. In addition, the composition can be applied to the surfaces of mineral boards, cables, trays, concrete, steel, wood, and the like, to provide fire resistance.

The thickness of the dry film is not particularly limited and can be appropriately adjusted within the range known in the relevant technical field. As an example, the film may be applied to a thickness of 0.5 to 3.0 mm. The application method may utilize conventional methods known in the relevant technical field, and for example, brush application, air spray application, airless spray application, and roller application may be used.

The fire-resistant coating composition of the present invention can be applied as a primer, an intermediate coat, or a topcoat. As an example, the fire-resistant coating composition of the present invention may be used as an intermediate coating composition in a coating system including a primer layer, an intermediate layer, and a topcoat layer.

As the primer coating composition, a water-soluble anti-corrosion coating composition may be used, and for example, a coating composition may be used which comprises 15 to 50 wt% of at least one fatty acid-modified epoxy resin having an epoxy equivalent weight of 200 to 1,000 g/eq, 1 to 20 wt% of an amide-based curing agent, 10 to 40 wt% of an extender pigment, and a solvent as the balance, based on the total weight of the primer coating composition. In the primer coating composition, the fatty acid modified epoxy resin and the amide-based curing agent may be included in a weight ratio of 10:6 to 10:8.

As the paint composition for the topcoat, a water-soluble coating composition may be used and, for example, a coating composition comprising 40 to 60 wt% of a core-shell type organic-inorganic composite copolymer emulsion resin, 5 to 20 wt% of an extender pigment, 1 to 20 wt% of a colored pigment, and 5 to 40 wt% of water, based on the total weight of the coating composition for the topcoat, may be used.

### [Modes for carrying out the invention]

The present invention will be described in more detail below through examples. However, the following examples are intended only to aid in understanding the invention and do not limit the scope of the invention in any way.

### [Preparation Examples 1 to 3: Preparation of vinyl acetate-based copolymer]

According to the composition of Table 1 below, raw materials 1 to 6 were placed into a 2 L four-necked round-bottom flask, and the temperature was raised to 60 °C while introducing nitrogen. Upon completion of the temperature increase, 25 wt% of an initiator mixture (raw materials 7 and 8) and 10 wt% of a monomer mixture (raw materials 9 to 13) were added dropwise, and the reaction was carried out while raising the temperature to 80 °C. Thereafter, the remaining initiator mixture and monomer mixture were uniformly added dropwise at 80 °C for 4 hours. After completion of the dropwise addition, the mixture was maintained at 80 °C for 1 hour, raw material 14 was introduced, and the mixture was cooled to 40 °C, followed by filtration through a 100-mesh filter to prepare a vinyl acetate-based copolymer of each Preparation Example (solid content: 50.0%, particle size (D50): 350 nm, pH: 4.0, and viscosity (at 25 °C): 400 cPs).

### [Comparative Preparation Examples 1 to 5: Preparation of vinyl acetate-based copolymer]

Vinyl acetate-based copolymers of each comparative example were prepared using the same method as the preparation example, except for the composition according to Table 2 below.

**[Table 1]**

| Components (wt%) | | Preparation Example | | |
|---|---|---|---|---|
| | | 1 | 2 | 3 |
| 1 | Deionized water | 39.49 | 39.49 | 39.49 |
| 2 | Sodium bicarbonate | 0.11 | 0.11 | 0.11 |
| 3 | Protective colloid | 0.59 | 0.59 | 0.59 |
| 4 | Emulsifier 1 | 0.38 | 0.38 | 0.38 |
| 5 | Emulsifier 2 | 0.58 | 0.58 | 0.58 |
| 6 | Emulsifier 3 | 0.48 | 0.48 | 0.48 |
| 7 | Deionized water | 6.75 | 6.75 | 6.75 |
| 8 | Initiator | 0.18 | 0.18 | 0.18 |
| 9 | Vinyl acetate monomer | 32.64 | 33.14 | 32.35 |
| 10 | Alkyl-modified vinyl acetate monomer | 9.61 | 9.61 | 9.6 |
| 11 | Multivalent double bond-containing monomer | 0.01 | 0.01 | 0.01 |
| 12 | Phosphoric acid-containing acrylic monomer | 1 | 0.5 | 1.3 |
| 13 | Acrylic monomer | 4.81 | 4.81 | 4.81 |
| 14 | Deionized water | 3.37 | 3.37 | 3.37 |
| Total | | 100.00 | 100.00 | 100.00 |

**[Table 2]**

| Components (wt%) | | Comparative Preparation Example | | | | |
|---|---|---|---|---|---|---|
| | | 1 | 2 | 3 | 4 | 5 |
| 1 | Deionized water | 39.49 | 39.49 | 39.49 | 39.49 | 39.49 |
| 2 | Sodium bicarbonate | 0.11 | 0.11 | 0.11 | 0.11 | 0.11 |
| 3 | Protective colloid | 0.59 | 0.59 | 0.59 | 0.59 | 0.59 |
| 4 | Emulsifier 1 | 0.38 | 0.38 | 0.38 | 0.38 | 0.38 |
| 5 | Emulsifier 2 | 0.58 | 0.58 | 0.58 | 0.58 | 0.58 |
| 6 | Emulsifier 3 | 0.48 | 0.48 | 0.48 | 0.48 | 0.48 |
| 7 | Deionized water | 6.75 | 6.75 | 6.75 | 6.75 | 6.75 |
| 8 | Initiator | 0.18 | 0.18 | 0.18 | 0.18 | 0.18 |
| 9 | Vinyl acetate monomer | 33.64 | 32.65 | 42.25 | 33.44 | 30.64 |
| 10 | Alkyl-modified vinyl acetate monomer | 9.61 | 9.61 | 0 | 9.61 | 9.61 |
| 11 | Multivalent double bond-containing monomer | 0.01 | 0 | 0.01 | 0.01 | 0.01 |
| 12 | Phosphoric acid-containing acrylic monomer | 0 | 1 | 1 | 0.2 | 3 |
| 13 | Acrylic monomer | 4.81 | 4.81 | 4.81 | 4.81 | 4.81 |
| 14 | Deionized water | 3.37 | 3.37 | 3.37 | 3.37 | 3.37 |
| Total | | 100.00 | 100.00 | 100.00 | 100.00 | 100.00 |

| | | | | | | |
|---|---|---|---|---|---|---|
| Protective colloid: NAatrasol 250LR (Ashland Inc.) Emulsifier 1: DO-113 (Dongnam Chemical Co., Ltd.) Emulsifier 2: FL-20 (Hannong Chemicals Inc.) Emulsifier 3: FL-10 (Hannong Chemicals Inc.) Initiator: KPS (ADEKA) Alkyl-modified vinyl acetate monomer: Compound of Chemical Formula 1 (R¹=CH₃, and R²=C₆CH₁₃) Multivalent double bond-containing monomer: Compound of Chemical Formula 3 (R=CH₂) Phosphoric acid-containing acrylic monomer: Compound of Chemical Formula 2 (R=propylene oxide, and n=5) Acrylic monomer: BA (Butyl acrylate) | | | | | | |

### [Examples 1 to 7: Preparation of fire-resistant coating composition]

According to the composition of Table 3 below, the fire-resistant coating composition of each example was prepared.

### [Comparative Examples 1 to 5: Preparation of fire-resistant coating composition]

According to the composition of Table 4 below, the fire-resistant coating composition of each comparative example was prepared.

**[Table 3]**

| Components (wt%) | Example | | | | | | |
|---|---|---|---|---|---|---|---|
| | 1 | 2 | 3 | 4 | 5 | 6 | 7 |
| Water | 8.9 | 8.9 | 8.9 | 11.7 | 8.2 | 10.5 | 11.9 |
| Copolymer 1 | 27.4 | | | 21.6 | 23.7 | 25.6 | 29.6 |
| Copolymer 2 | | 27.4 | | | | | |
| Copolymer 3 | | | 27.4 | | | | |
| Copolymer 4 | | | | | | | |
| Copolymer 5 | | | | | | | |
| Copolymer 6 | | | | | | | |
| Copolymer 7 | | | | | | | |
| Copolymer 8 | | | | | | | |
| Pigment | 11.5 | 11.5 | 11.5 | 11.5 | 11.5 | 13.5 | 8.9 |
| Carbonizing agent | 8.6 | 8.6 | 8.6 | 6.8 | 6.8 | 6.8 | 6.8 |
| Foaming agent | 7.7 | 7.7 | 7.7 | 7.7 | 8.9 | 7.7 | 5.6 |
| Catalyst | 25.2 | 25.2 | 25.2 | 25.2 | 23.7 | 25.2 | 26.5 |
| Reinforcing agent | 3.2 | 3.2 | 3.2 | 5.9 | 5.9 | 3.2 | 3.2 |
| Flame retardant | 0.5 | 0.5 | 0.5 | 2.6 | 2.6 | 0.5 | 0.5 |
| Coating film-forming agent | 1.6 | 1.6 | 1.6 | 1.6 | 1.6 | 1.6 | 1.6 |
| Additive | 2.4 | 2.4 | 2.4 | 2.4 | 2.4 | 2.4 | 2.4 |
| Thickener | 3 | 3 | 3 | 3 | 4.7 | 3 | 3 |
| Total | 100.00 | 100.00 | 100.00 | 100.00 | 100.00 | 100.00 | 100.00 |

**[Table 4]**

| Components (wt%) | Comparative Example | | | | |
|---|---|---|---|---|---|
| | 1 | 2 | 3 | 4 | 5 |
| Water | 8.9 | 8.9 | 8.9 | 8.9 | 8.9 |
| Copolymer 1 | | | | | |
| Copolymer 2 | | | | | |
| Copolymer 3 | | | | | |
| Copolymer 4 | 27.4 | | | | |
| Copolymer 5 | | 27.4 | | | |
| Copolymer 6 | | | 27.4 | | |
| Copolymer 7 | | | | 27.4 | |
| Copolymer 8 | | | | | 27.4 |
| Pigment | 11.5 | 11.5 | 11.5 | 11.5 | 11.5 |
| Carbonizing agent | 8.6 | 8.6 | 8.6 | 8.6 | 8.6 |
| Foaming agent | 7.7 | 7.7 | 7.7 | 7.7 | 7.7 |
| Catalyst | 25.2 | 25.2 | 25.2 | 25.2 | 25.2 |
| Reinforcing agent | 3.2 | 3.2 | 3.2 | 3.2 | 3.2 |
| Flame retardant | 0.5 | 0.5 | 0.5 | 0.5 | 0.5 |
| Coating film-forming agent | 1.6 | 1.6 | 1.6 | 1.6 | 1.6 |
| Additive | 2.4 | 2.4 | 2.4 | 2.4 | 2.4 |
| Thickener | 3 | 3 | 3 | 3 | 3 |
| Total | 100.00 | 100.00 | 100.00 | 100.00 | 100.00 |

| | | | | | |
|---|---|---|---|---|---|
| Copolymer 1: Vinyl acetate-based copolymer of Preparation Example 1 Copolymer 2: Vinyl acetate-based copolymer of Preparation Example 2 Copolymer 3: Vinyl acetate-based copolymer of Preparation Example 3 Copolymer 4: Vinyl acetate-based copolymer of Comparative Preparation Example 1 Copolymer 5: Vinyl acetate-based copolymer of Comparative Preparation Example 2 Copolymer 6: Vinyl acetate-based copolymer of Comparative Preparation Example 3 Copolymer 7: Vinyl acetate-based copolymer of Comparative Preparation Example 4 Copolymer 8: Vinyl acetate-based copolymer of Comparative Preparation Example 5 Pigment: Titanium dioxide (13463-67-7, Ningbo Xinfu Titanium Dioxide) Carbonizing agent: PENTA (115-77-5, Hangzhou JLS flame retardants) Foaming agent: Melamine (108-78-1, Hangzhou JLS flame retardants) Catalyst: Ammonium Polyphosphate (68333-79-9, Zhenjiang Great Honest) Reinforcing agent: Lapinus CF 50 (Lapinus) Flame retardant: Liquid flame retardant (FlamEL RFL 184538-58-7, KhaiEL GmbH) Coating film-forming agent: Velate 368 Coalescent (EASTMAN) | | | | | |

Additive: A mixture of a dispersant (Disperse 752W, EVONIK Industries), a preservative (Acticide MBS, Thor Specialties), an anti-freeze agent (Propylene Glycol, DOW Chemical), a first anti-foaming agent (FOAMEX 3062, EVONIK Industries), and a second anti-foaming agent (Foamstar ST2400, BASF) (mixed at a ratio of 30% dispersant, 20% preservative, 30% anti-freeze agent, and 20% anti-foaming agent).
Thickener: Polyamide Wax (Monoral HR-300, HS CHEM)

### [Property evaluation]

The properties of the fire-resistant coating compositions prepared according to each example and comparative example and coating films formed therefrom were measured according to the following methods, and the results are shown in Tables 5 and 6 below.

### Specimen preparation

The coating composition prepared in each example and comparative example was air-sprayed onto a 1.5T cold-rolled steel plate to a dry coating film thickness of 1 mm and then dried under conditions of a temperature of 25±2 °C and a relative humidity of 50±10%.

### Water resistance

Each specimen was immersed in clean water for 24 hours, and then the appearance of the coating film was visually evaluated at different drying times.

### Fire resistance performance

Fire resistance performance tests were performed based on KS F2257.

### Flow resistance

An anti-sag meter was placed on a glass plate, and the coating compositions of each example and comparative example (controlled to 25±2 °C) were drawn straight down at a constant speed (150 mm/s). Immediately thereafter, the glass plate was vertically placed on a support such that the thinnest portion of the coating film faced upward and then dried (temperature in the test room 25±2 °C and relative humidity 65±10 %). The thickest stripe that was about to be joined to the stripe below was selected to evaluate the central part.

### Viscosity (KU)

It was measured using a STORMER viscometer at 25 °C.

**[Table 5]**

| Items | Target | Example | | | | | | |
|---|---|---|---|---|---|---|---|---|
| | | 1 | 2 | 3 | 4 | 5 | 6 | 7 |
| | 12-hour drying | Good | Good | Good | Good | Good | Good | Good |
| Water resistance | 1-day drying | Good | Good | Good | Good | Good | Good | Good |
| | 3-day drying | Good | Good | Good | Good | Good | Good | Good |
| | 5-day drying | Good | Good | Good | Good | Good | Good | Good |
| | 7-day drying | Good | Good | Good | Good | Good | Good | Good |
| Fire resistance performance (KS F 2257, 2 hours) | Average temperature of 538 °C or lower | 510 | 515 | 505 | 523 | 525 | 528 | 526 |
| | Maximum temperature of 643 °C or lower | 552 | 572 | 545 | 589 | 590 | 592 | 589 |
| Flow resistance | 60 MILS or more | 85 | 90 | 75 | 85 | 95 | 85 | 85 |
| Viscosity | 110 to 140 | 130 | 135 | 120 | 120 | 135 | 128 | 132 |

**[Table 6]**

| Items | Target | Comparative Example | | | | |
|---|---|---|---|---|---|---|
| | | 1 | 2 | 3 | 4 | 5 |
| Water resistance | 12-hour drying | Swelling | Swelling | Swelling | Swelling | Swelling |
| | 1-day drying | Good | Swelling | Good | Swelling | Swelling |
| | 3-day drying | Good | Good | Good | Swelling | Swelling |
| | 5-day drying | Good | Good | Good | Swelling | Swelling |
| | 7-day drying | Good | Good | Good | Swelling | Good |
| Fire resistance performance (KS F 2257, 2 hours) | Average temperature of 538 °C or lower | 532 | 520 | 535 | 500 | 505 |
| | Maximum temperature of 643 °C or lower | 582 | 580 | 600 | 540 | 538 |
| Flow resistance | 60 MILS or more | 85 | 60 | 85 | 85 | 80 |
| Viscosity | 110 to 140 | 131 | 100 | 125 | 128 | 132 |

From the results of Tables 5 and 6 above, the coating films formed from the fire-resistant coating compositions of Examples 1 to 7 containing the vinyl acetate-based copolymer according to the present invention (Preparation Example 1-3) showed excellent properties across all measurement items. Specifically, the coating films formed of the fire-resistant coating composition of Examples 1 to 7 according to the present invention were found to satisfy 2-hour fire resistance performance while also exhibiting excellent water resistance and workability.

On the other hand, the coating films formed from the fire-resistant coating compositions of Comparative Examples 1-5, which included a vinyl acetate-based copolymer including no phosphoric acid-containing acrylic monomer (Comparative Preparation Example 1), a vinyl acetate-based copolymer including no polyvalent double bond-containing monomer (Comparative Preparation Example 2), a vinyl acetate-based copolymer including no alkyl-modified vinyl acetate monomer (Comparative Preparation Example 3), and vinyl acetate-based copolymers including a phosphoric acid-containing acrylic monomer in an amount outside the content range of the present invention (Comparative Preparation Examples 4 and 5), exhibited inferior water resistance compared to the coating films of the examples.

### [Industrial Applicability]

The present invention provides an eco-friendly water-based fire-resistant coating composition that has excellent fire resistance performance and excellent water resistance of the coating film. The fire-resistant coating composition according to the present invention achieves fire resistance performance of 2 hours or more, while also exhibiting excellent durability and water resistance. The fire-resistant coating composition of the present invention provides excellent water resistance both immediately after application and after complete drying of the coating film, enables off-site (shop) application due to a fast drying speed of the coating film, shortens construction periods even during on-site application, and facilitates easy control of the coating film thickness. In addition, the water-based fire-resistant coating composition according to the present invention is environmentally friendly due to the absence of organic solvents.

## Claims

1. A vinyl acetate-based copolymer that is polymerized from a monomer mixture comprising a vinyl acetate monomer, an alkyl-modified vinyl acetate monomer, a phosphoric acid-containing acrylic monomer, and a multivalent double bond-containing monomer,
wherein the phosphoric acid-containing acrylic monomer is included in an amount of 0.5 to 5 wt% based on a total weight of the monomer mixture.

2. The vinyl acetate-based copolymer of claim 1, wherein the alkyl-modified vinyl acetate monomer is a compound represented by the following Chemical Formula 1: 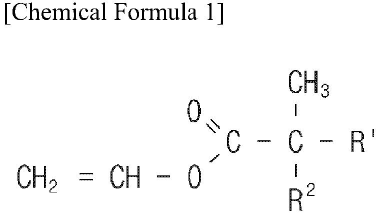 in Chemical Formula 1,
R¹ and R² are hydrocarbon groups having 1 to 15 carbon atoms, which are the same or different from each other.

3. The vinyl acetate-based copolymer of claim 1, wherein the phosphoric acid-containing acrylic monomer is a compound represented by the following Chemical Formula 2: 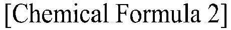 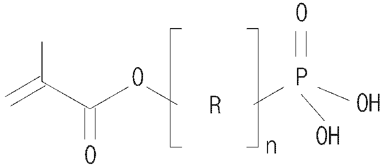 in Chemical Formula 2,
R is ethylene oxide or propylene oxide, and
n is an integer from 0 to 10.

4. The vinyl acetate-based copolymer of claim 1, wherein the multivalent double bond-containing monomer is a compound represented by the following Chemical Formula 3: 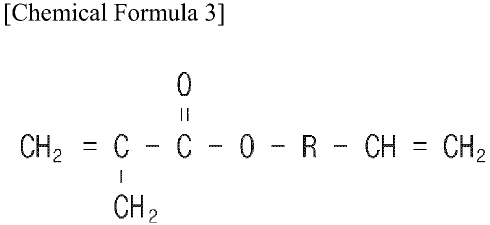 in Chemical Formula 3,
R is a hydrocarbon group having 1 to 15 carbon atoms.

5. The vinyl acetate-based copolymer of claim 1, which comprises 50 to 85 wt% of the vinyl acetate monomer, 10 to 40 wt% of the alkyl-modified vinyl acetate monomer, 0.5 to 5 wt% of the phosphoric acid-containing acrylic monomer, and 0.01 to 0.5 wt% of the multivalent double bond-containing monomer, based on the total weight of the monomer mixture.

6. The vinyl acetate-based copolymer of claim 1, further comprising 4 to 20 wt% of an acrylic monomer based on the total weight of the monomer mixture.

7. The vinyl acetate-based copolymer of claim 1, which has a glass transition temperature of -30 to 60 °C, a coating film formation temperature of 0 to 30 °C, a solid content of 40 to 60%, a particle size (D50) of 200 to 500 nm, a viscosity (at 25 °C) of 200 to 800 cPs, and a pH of 2.5 to 5.5.

8. A fire-resistant coating composition comprising the vinyl acetate-based copolymer of any one of claims 1 to 7, a foaming agent, and a water-based solvent.

9. The fire-resistant coating composition of claim 8, further comprising one or more selected from the group consisting of a thickener, a catalyst, a carbonizing agent, a pigment, a reinforcing agent, and a flame retardant.

10. The fire-resistant coating composition of claim 9, comprising 5 to 35 wt% of the vinyl acetate-based copolymer, 1 to 15 wt% of the foaming agent, 1 to 10 wt% of the thickening agent, 15 to 35 wt% of the catalyst, 5 to 15 wt% of the carbonizing agent, 5 to 20 wt% of the pigment, 2 to 15 wt% of the reinforcing agent, 0.1 to 10 wt% of the flame retardant, and the water-based solvent as a balance of the fire-resistant coating composition for reaching 100 wt%, based on a total weight of the fire-resistant coating composition.
